# EUROPÄISCHE PATENTSCHRIFT

(11) **EP 0 477 629 B1**
(45) Veröffentlichungstag und Bekanntmachung des Hinweises auf die Patenterteilung: **09.11.1994**
(21) Anmeldenummer: 91115129.8
(22) Anmeldetag: 06.09.1991
(51) Int. Cl.: A01D 34/08

(54) **Handgeführtes Motor-Arbeitsgerät mit elastisch gelagertem Lenkholm**
Hand-guided motor tool with elastically mounted handle
Outil motorisé guidé à la main, avec poignée montée élastiquement

(30) Priorität: 10.09.1990 DE 4028707
(43) Veröffentlichungstag der Anmeldung: 01.04.1992
(73) Patentinhaber: AGRIA-WERKE GMBH, D-74215 Möckmühl (DE)
(72) Erfinder: Nold, Joachim, W-7108 Möckmühl (DE); Janson, Dieter, W-7101 Oedheim (DE)
(74) Vertreter: Haug, Dietmar, Dipl.-Ing.

(56) Entgegenhaltungen:
- EP-A- 0 262 425
- DE-A- 3 145 337
- DE-A- 3 503 938

## Beschreibung

Die Erfindung bezieht sich auf ein Arbeitsgerät nach dem Oberbegriff des Anspruchs 1.

Bei Arbeitsgeräten der vorliegenden Art treten im Betrieb Schwingungen auf, die vom Arbeitsgerät auf den Lenkholm und vom letzteren auf die Bedienungsperson übertragen werden. Hierdurch wird die Bedienungsperson beeinträchtigt und die Bedienung bzw. Führung des Arbeitsgerätes wird wesentlich erschwert. Dies gilt insbesondere für Arbeitsgeräte mit hinund hergehendem Arbeitswerkzeug, wie es bei einem Mähgerät der Fall ist. Die Schwingungen können in nur einer oder auch in mehreren Ebenen auftreten, wobei die Schwingungsrichtung, insbesondere unter den im Betrieb auftretenden Belastungen des Arbeitsgerätes auch unterschiedliche Richtungen einnehmen können. Dabei können verschiedene Schwingungen einander ergänzen oder auch teilweise aufheben.

Bei Arbeitsgeräten mit nicht hin- und hergehenden Werkzeugen werden die Schwingungen hauptsächlich durch den Motor- und Arbeitsbetrieb verursacht.

Je nach der Konstruktion des Arbeitsgerätes können bestimmte Schwingungen bzw. Vibrationen vom Arbeitsgerät absorbiert werden. Hierbei handelt es sich insbesondere um solche Schwingungsrichtungen, in denen das Arbeitsgerät nachgiebig ist. Jedoch sind die Schwingungen insbesondere bei der Handhabung im schwierigen Gelände so indifferent, daß bestimmte Schwingungsrichtungen bzw. Schwingungshauptachsen nicht vorgegeben werden können.

Zur Verminderung des vorbeschriebenen Problems und der daraus resultierenden Schwierigkeiten ist bei einem in der DE-OS 35 03 938 beschriebenen Arbeitsgerät der Griff- bzw. Lenkholm elastisch am Arbeitsgerät gelagert. Hierdurch lassen sich die auf dem Lenkholm übertragenen Schwingungen bzw. Vibrationen reduzieren. Bei dieser bekannten Ausgestaltung sind zur Lagerung des Griffholms zwei sich rechtwinklig zueinander erstreckende Lagerachsen vorgesehen, die in elastischen Buchsen aus Gummi stecken. Die eine Lageachse ist am dem Arbeitsgerät zugewandten Ende des Lenkholms befestigt, und sie faßt in zwei in ihrer Längsrichtung hintereinander auf Abstand angeordnete Gummibuchsen ein, die mittels Befestigungsschellen am aufrechten Schenkel eines Haltewinkels befestigt sind, dessen anderer, horizontaler Schenkel durch die andere Lagerachse gebildet ist. Letztere steckt ebenfalls in zwei Gummilagerbuchsen, die mittels Befestigungsschellen am Arbeitsgerät befestigt sind. Dabei ist die Anordnung der Lagerachsen so getroffen, daß der Schnittpunkt ihrer Längsmittelachsen in einem Abstand von den ihm zugewandten Enden der Lagerachsen angeordnet ist. Der sich aufgrund dieser Anordnung ergebende Abstand zwischen den einander zugewandten Enden der Lagerachsen ist bei der bekannten Ausgestaltung durch eine Z-förmig abgekröpfte Form des aufrechten Schenkels des Haltewinkels noch vergrößert.

Bei der bekannten Ausgestaltung ergibt sich somit eine große und sperrige Bauweise für die Halterung des Lenkholms am Arbeitsgerät, was unerwünscht ist. Da der Lenkholm in den meisten Fällen an der Oberseite des Arbeitsgeräts angebracht ist, ergibt sich nicht nur für die Halterung des Lenkholms, sondern auch für das Arbeitsgerät selbst eine große Bauhöhe, was grundsätzlich unerwünscht und auch aus ergonomischen sowie lenktechnischen Gründen vermieden werden soll.

Der Erfindung liegt die Aufgabe zugrunde, ein Arbeitsgerät der eingangs angegebenen Art so auszugestalten, daß bei Gewährleistung einer Dämpfung der vom Arbeitsgerät auf den Griffholm übertragenen Schwingungen bzw. Vibrationen die Baugröße des Arbeitsgeräts bzw. der elastischen Lagerung für den Lenkholm verringert werden kann.

Diese Aufgabe wird durch die Merkmale des Anspruchs 1 gelöst. Vorteilhafte Weiterbildungen der Erfindung sind in den Unteransprüchen gekennzeichnet.

Beim erfindungsgemäßen Arbeitsgerät sind die Lagerachsen T- oder kreuzförmig zueinander angeordnet. Hierdurch läßt sich zumindest in einer Richtung der die Lagerachsen enthaltenden Ebene die Baugröße, insbesondere die Bauhöhe bzw. Breite auf die Länge der entsprechenden Lagerachse beschränken, weil bei der T-förmigen Ausgestaltung die eine Lageachse im mittleren Bereich der anderen Lagerachse und bei der kreuzförmigen Ausgestaltung beide Lagerachsen im mittleren Bereich der jeweils anderen Lagerachse angeordnet sind.

In den Unteransprüchen sind Merkmale enthalten, die ebenfalls zur Verwirklichung einer kleinen Bauweise beitragen und eine einfache und kostengünstig herstellbare Bauweise ermöglichen, wobei sie auch günstige Anbaumöglichkeiten des Lenkholms am Arbeitsgerät unter Berücksichtigung der erfindungsgemäßen elastischen Lagerung enthalten.

Nachfolgend wird die Erfindung anhand von in einer vereinfachten Zeichnung dargestellten bevorzugten Ausführungsbeispielen näher erläutert. Es zeigt:
- Figur 1: ein erfindungsgemäßes handgeführtes, motorgetriebenes Arbeitsgerät in der Draufsicht;
- Figuren 2 bis 5: jeweils im vertikalen Schnitt Ausgestaltungen für den Anschluß des Lenkholms am Arbeitsgerät jeweils mit elastischer Lagerung des Lenksholms in vergrößerter Darstellung.

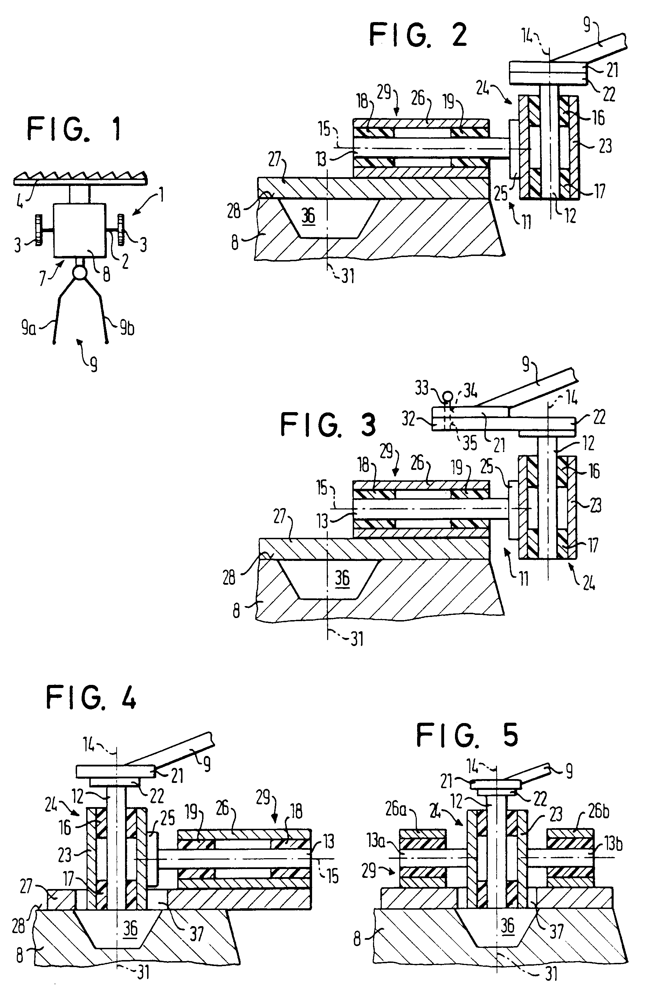

Bei dem in Figur 1 dargestellten Arbeitsgerät 1 handelt es sich um einen Motormäher mit insbesondere nur einer Achse 2 mit zwei Rädern 3. Der Mähbalken 4 befindet sich an der Vorderseite des Arbeitsgeräts und ist durch einen Mähbalkenträger 5 mit diesem verbunden. Auf dem Fahrzeug- bzw. Geräterahmen 7 des Arbeitsgeräts 1 befindet sich der im einzelnen nicht dargestellte Antriebsmotor mit seinem Gehäuse 8, wobei dieser auch in dem Geräterahmen integriert sein und diesen teilweise bilden kann. Der Lenkholm 9 ist mittels einer allgemein mit 11 bezeichneten elastischen Lagerung an der Oberseite des Geräterahmens 7 bzw. Gehäuses 8 angebracht, und er erstreckt sich mit zwei, einen Querabstand voneinander aufweisenden Lenkholmteilen 9a, 9b vom Arbeitsgerät 1 nach hinten.

Wie die Figuren 2 bis 5 zeigen, weist die elastische Lagerung 11 zwei Lagerachsen 12, 13 auf, die bezüglich ihrer Längsmittelachsen 14, 15 senkrecht zueinander stehen und in Buchsen 16, 17, 18, 19 aus elastischem Material stecken. Hierdurch ist der Lenkholm 9 im Rahmen der Elastizität der Lagerbuchsen 16 bis 19 geringfügig allseitig nachgiebig am Gehäuse 8 gehalten, und aufgrund dieser Nachgiebigkeit werden die vom Arbeitsgerät 1 in seinem Betrieb auf den Lenkholm übertragenen Schwingungen bzw. Vibrationen wesentlich reduziert und auf eine für die Bedienungsperson erträgliche Größe gebracht. Hierzu sind die Lagerbuchsen 16 bis 19 aus einem Material wie insbesondere Gummi oder Kunststoff mit einer geeigneten Elastizität zu fertigen.

Bei der vorliegenden Ausgestaltung sind die Lagerachsen 12, 13 vertikal bzw. horizontal angeordnet, wobei die vertikale Lagerachse 12 am vorderen Ende des Lenkholms 9 befestigt ist. Vorzugsweise dienen hierzu am Lenkholm 9 und am oberen Ende der Lagerachse 12 befestigte horizontale Flanschplatten 21, 22, die unlösbar oder z.B. mittels nicht dargestellten Schrauben lösbar miteinander verbunden sind. Die vertikale Lagerachse 12 steckt in den vertikalen Lagerbuchsen 16, 17, die einen vertikalen Abstand voneinander aufweisen und in einem Lagerrohr 23 viereckigen oder runden Querschnitts eingesetzt und darin in nicht dargestellter Weise unverschieblich gehalten sind. Die Länge des Lagerrohrs 23 ist an die Länge der Lageachse 12 angepaßt, so daß die obere Lagerbuchse 16 dem oberen und die untere Lagerbuchse 17 dem unteren Ende der Lagerachse 12 zugeordnet ist, die Querschnittsform der Lagerachse 12 und die Innenquerschnittsform der Lagerbuchsen 16, 17 kann kreisrund oder auch eckig, insbesondere viereckig bzw. quadratisch sein. Im ersten Fall ist eine nicht dargestellte Drehsicherung für die Lagerachse 12 im durch das Lagerrohr 23 gebildeten ersten Lagerteil 24 vorzusehen, wenn eine horizontale Dreh- bzw. Schwenkbarkeit des Lenkholms 9 nicht erwünscht ist. Ein solches Drehgelenk kann jedoch vorhanden sein und ist auch vorteilhaft, weil es eine wahlweise seitliche Verstellbarkeit des Lenkholms ermöglicht, um z.B. Lenkvorgänge einzuleiten. Es ist jedoch auch möglich, eine solche Schwenkbarkeit dazu zu benutzen, den Lenkholm 9 zwischen einer sich nach hinten erstreckenden Position und einer sich nach vorne erstreckenden Position zu verstellen, um z.B. das Arbeitsgerät umzurüsten zwecks Anordnung und Gebrauch einer anderen Arbeitseinheit, wie z.B. eines Kultivators, Pflugs oder dergleichen. Bei einer solchen Umstellbarkeit können lösbare Drehmitnahmeverbindungen zwischen der vertikalen Lagerachse 12 und dem ersten Lagerteil 24 vorgesehen sein, um den Lenkholm 9 in der jeweiligen Stellung festzulegen.

Die horizontale Lagerachse 13 ist an der Vorderseite am Lagerrohr 23 befestigt, vorzugsweise mittels eines flanschförmigen Kopfstücks 25, das am Lagerrohr 23 angeschweißt oder auch mittels Schrauben lösbar verbunden sein kann. Die horizontale Lagerachse 13 steckt in den horizontalen Lagerbuchsen 18, 19, die in einem horizontalen Abstand voneinander in einem horizontalen Lagerrohr 26 sitzen und darin in nicht dargestellter Weise gesichert sind. Die Länge des horizontalen Lagerrohrs 26 ist etwa an die Länge der horizontalen Lagerachse 13 angepaßt, so daß die Lagerbuchsen 18, 19 ebenfalls den Enden der Lagerachse 13 zugeordnet sind. Auch das horizontale Lagerrohr 26 weist einen runden (mit Drehsicherung) oder viereckigen, z.B. quadratischen Querschnitt auf, und es ist auf einer an der Oberseite des Gehäuses 8 angeordneten Befestigungsplatte 27 oder unmittelbar auf der Oberseite 28 des Gehäuses 8 angeordnet und in nicht dargestellter Weise befestigt. Das horizontale Lagerrohr 26 bildet mit seinen Lagerbuchsen 18, 19 ein zweites Lagerteil 29 für den Lenkholm 9.

Zur axialen Sicherung der Lagerachsen 12, 13 im ersten und zweiten Lagerteil 24, 29 sind nicht dargestellte, übliche axiale Sicherungsteile vorgesehen.

Bei den Ausgestaltungen gemäß Figuren 2 bis 5 befindet sich die horizontale Lagerachse 13 bzw. das horizontale zweite Lagerteil 29 bezüglich der vertikalen Lagerachse 12 bzw. dem vertikalen ersten Lagerteil 24 in mittlerer Höhe, so daß die horizontale Längsmittelachse 15 die vertikale Lagerachse 12 in deren mittleren Bereich schneidet. Dabei besteht gemäß Figuren 2 bis 4 eine Anordnung in Form eines auf der Seite liegenden T.

Dagegen ist bei der Ausgestaltung gemäß Figur 5 eine kreuzförmige Anordnung der Lagerachsen 12, 13 bzw. Lagerteile 24, 29 verwirklicht. Bei dieser Ausgestaltung sind die horizontale Lagerachse 13 und das horizontale Lagerrohr 26 quergeteilt, wobei das erste vertikale Lagerteil 24 zwischen den Lagerrohrteilen 26a, 26b und Lagerachsenteilen 13a, 13b des zweiten horizontalen Lagerteils 29 angeordnet ist. Die Lagerachsenteile 13a, 13b sind in etwa mittlerer Höhe einander gegenüberliegend an den Außenseiten des vertikalen Lagerrohrs 23 befestigt, wobei das vertikale Lagerrohr 23 mit seitlichem Bewegungsspiel zwischen den Lagerrohrteilen 26a, 26b steckt.

Im folgenden werden weitere Ausgestaltungs- bzw. Anordnungsunterschiede zwischen den Ausführungsbeispielen gemäß Figuren 2 bis 5 erläutert.

Gemäß Figuren 2 und 3 ist das zweite horizontale Lagerteil 29 bezüglich der vertikalen Mittelachse 31 des Gehäuses 8 so außermittig angeordnet, daß das erste vertikale Lagerteil 24 sich neben dem Gehäuse 8 befindet, und zwar bezüglich des Arbeitsgeräts 1 entweder vorne oder hinten. Dabei ist bei der Ausgestaltung nach Figur 3 die Flanschplatte 22 an der vertikalen Lagerachse 12 zur vertikalen Mittelachse 31 des Arbeitsgeräts 1 verlängert, wobei die Flanschplatte 21 des Lenkholms 9 bezüglich des Arbeitsgeräts 1 nach innen versetzt ist und mit dieser Verlängerung 32 der Flanschplatte 22 in der vorbeschriebenen Weise verbunden ist.

In Figur 3 ist als Ausführungsbeispiel für eine Feststellvorrichtung zwischen dem Lenkholm 9 und der vertikalen Lagerachse 12 zwecks Feststellung des Lenkholms 9 in seinen wahlweisen Schwenkstellungen ein Steckstift 33 vorgesehen, der von oben in ein Steckloch 34 in der oberen Flanschplatte 21 und in ein zugehöriges von mehreren in der unteren Flanschplatte angeordneten Stecklöchern 35 einsteckbar ist.

Bei der Ausgestaltung gemäß Figur 4 ist das horizontale zweite Lagerteil 29 bezüglich der vertikalen Mittelachse 31 ebenfalls nach vorne oder hinten versetzt angeordnet, dabei befindet sich das erste vertikale Lagerteil 24 in der vertikalen Mittelachse 31 des Gehäuses 8, die auch vertikale Mittelachse des Arbeitsgerätes 1 sein kann. Gemäß Figur 5 befinden sich die Lagerrohrteile 26a, 26b zu beiden Seiten der vertikalen Mittelachse 31 und das vertikale erste Lagerteil 24 befindet sich in der vertikalen Mittelachse 31.

Wie die Figuren 2 bis 5 deutlich zeigen, wird mit der vorbeschriebenen Bauweise eine niedrige Bauhöhe für die elastische Lagerung 11 bzw. das Arbeitsgerät 1 erreicht, wobei die kreuzweise Anordnung der Lagerachse 12, 13 nach Figur 5 außerdem eine kleine bzw. kompakte Bauweise in horizontaler Richtung erreicht, wobei diese Ausgestaltung sehr gut am Gehäuse zu befestigen ist.

Es ist vorteilhaft, an der Oberseite des Gehäuses 8 eine vorzugsweise mittige Ausnehmung 36 vorzusehen, in die das vertikale erste Lagerteil 24 vorteilhaft eintauchen kann (siehe Figuren 4 und 5), wodurch die Bauhöhe weiter vermindert werden kann. Die gegebenenfalls vorhandene Befestigungsplatte 27 kann dabei ein Loch 37 aufweisen, so daß das vertikale erste Lagerteil 24 auch darin einzutauchen vermag.

## Patentansprüche

1. Handgeführtes, motorgetriebenes Arbeitsgerät (1), insbesondere Mähgerät, mit einer oder zwei Achsen (2) mit Rädern (3) und mit einem insbesondere zwei Holmteile (9a,9b) aufweisenden Lenkholm (9), der mittels zwei quer zueinander verlaufenden Lagerachsen (12,13) am Arbeitgerät (1) gelagert ist, die in elastischen Lagerelementen (16 bis 19) von Lagerteilen stecken,
**dadurch gekennzeichnet**,
daß die Lagerachsen (12, 13) T- oder kreuzförmig zueinander angeordnet sind, so daß die Längsmittelachse (15) der einen Lagerachse (13) die Längsmittelachse (14) der anderen Lagerachse (12) in deren mittleren Bereich im wesentlichen schneidet.

2. Arbeitsgerät nach Anspruch 1, **dadurch gekennzeichnet,** daß die Lagerachsen (12, 13) in Lagerbuchsen (16 bis 19) aus elastischem Material, insbesondere Gummi oder Kunststoff, sitzen, wobei den Lagerachsen (12, 13) vorzugsweise zwei, jeweils einen Abstand voneinander aufweisende und miteinander fluchtende Lagerbuchsen (16 bis 19) zugeordnet sind.

3. Arbeitsgerät nach Anspruch 2, **dadurch gekennzeichnet,** daß die Lagerbuchsen (16 bis 19) in Lagerrohren (23, 26) vorzugsweise runden oder viereckigen Querschnitts sitzen.

4. Arbeitsgerät nach einem der Ansprüche 1 bis 3, **dadurch gekennzeichnet,** daß die eine Lagerachse (12) im wesentlichen vertikal und die andere Lagerachse (13) im wesentlichen horizontal angeordnet ist.

5. Arbeitsgerät nach Anspruch 4, **dadurch gekennzeichnet,** daß die vertikal angeordnete Lagerachse (12) am Lenkholm (9) und die horizontale Lagerachse (13) am Arbeitsgerät (1) angeordnet ist.

6. Arbeitsgerät nach einem oder mehreren der vorhergehenden Ansprüche 1 bis 5, **dadurch gekennzeichnet,** daß die horizontale Lagerachse (13) in etwa mittlerer Höhe am vertikalen Lagerrohr (23) vorzugsweise mit einem flanschförmigen Kopfteil (25) befestigt ist.

7. Arbeitsgerät nach einem oder mehreren der vorhergehenden Ansprüche 1 bis 6, **dadurch gekennzeichnet,** daß die Lagerachsen (12, 13) und die Lagerbuchsen (16 bis 19) eine kreisrunde oder viereckige, insbesondere quadratische Außen- bzw. Innenquerschnittsform aufweisen.

8. Arbeitsgerät nach einem der vorhergehenden Ansprüche 1 bis 7, **dadurch gekennzeichnet,** daß die vertikale Lagerachse (12) ein Dreh- oder Schwenklager bildet, in dem der Lenkholm (9) horizontal hin- und herschwenkbar und/oder um 180° schwenkbar und in den Schwenkendstellungen feststellbar ist.

9. Arbeitsgerät nach einem oder mehreren der vorhergehenden Ansprüche, **dadurch gekennzeichnet,** daß zwischen dem Lenkholm (9) und der vertikalen Lagerachse (12) ein horizontales Schwenkgelenk für seitliche, gegebenenfalls bis 180° große Schwenkbewegungen des Lenkholms (9) mit vorzugsweise einer Feststellvorrichtung für den Lenkholm (9) in dessen Schwenkendstellungen angeordnet ist.

10. Arbeitsgerät nach Anspruch 8 oder 9, **dadurch gekennzeichnet,** daß eine Feststellvorrichtung mit zwei übereinander angeordneten Gelenkscheiben (21, 22) vorgesehen ist, in die von oben ein Steckstift (33) in Stecklöchern (34, 35) einsteckbar ist, wobei in der unteren Gelenkscheibe (22) vorzugsweise mehrere Stecklöcher (35) vorgesehen sind.

11. Arbeitsgerät nach einem oder mehreren der vorhergehenden Ansprüche, **dadurch gekennzeichnet,** daß das Lagerteil (29) mit der horizontalen Lagerachse (13) auf dem Chassiss oder einem Motorgehäuse (8) angeordnet ist.

12. Arbeitsgerät nach Anspruch 11, **dadurch gekennzeichnet**, daß das Lagerteil (29) mit der horizontalen Lagerachse (13) in einer Position auf dem Chassis oder Motorgehäuse (8) angeordnet ist, in der es an den Rand des Chassis oder Motorgehäuses (8) etwa angrenzt, und das andere Lagerteil (24) nebem dem Chassis oder Motorgehäuse (8) angeordnet ist.

13. Arbeitsgerät nach einem oder mehreren der vorhergehenden Ansprüche, **dadurch gekennzeichnet,** daß das Lagerteil (24) mit der vertikalen Lagerachse (12) mit der vertikalen Mittelachse (31) des Chassis oder Motorgehäuses (8) fluchtend angeordnet ist.

14. Arbeitsgerät nach einem oder mehreren der vorhergehenden Ansprüche, **dadurch gekennzeichnet,** daß die vertikale Lagerachse (12) bezüglich der horizontalen Lagerachse (13) in mittlerer Position angeordnet ist.

15. Arbeitsgerät nach Anspruch 14, **dadurch gekennzeich**net, daß das die horizontale Lagerachse (13) aufweisende Lagerteil (29) durch zwei einen Abstand voneinander aufweisende Lagerteilstücke (26a, 26b) gebildet ist und das die vertikale Lagerachse (12) aufweisende Lagerteil (24) zwischen den Lagerteilstücken (26a, 26b) angeordnet ist.

16. Arbeitsgerät nach Anspruch 15, **dadurch gekennzeichnet,** daß die horizontale Lagerachse (13) ebenfalls in zwei voneinander beabstandete Lagerachsenstücke (13a, 13b) geteilt ist und die Lagerachsenstücke (13a, 13b) einander gegenüberliegend an dem Lagerrohr (23) des die vertikale Lagerachse (12) aufweisenden Lagerteils (24) befestigt sind.

17. Arbeitsgerät nach einem oder mehreren der vorhergehenden Ansprüche, **dadurch gekennzeichnet,** daß das die horizontale Lagerachse (13) aufweisende Lagerteil (29) auf einer auf dem Chassis oder Motorgehäuse (8) befestigten Platten (27) befestigt ist.

18. Arbeitsgerät nach Anspruch 17, **dadurch gekennzeichnet,** daß die Platten (27) ein Loch (37) aufweist, in das das die vertikale Lagerachse (12) aufweisende Lagerteil (24) eintaucht.

## Claims

1. Hand-guided, motor-driven tool (1), in particular mower, having one or two axles (2) with wheels (3) and having a steering handle (9) which has in particular two handle parts (9a, 9b) and is mounted on the tool (1) by means of two bearing axles (12, 13) which are transverse to one another and are inserted into elastic bearing elements (16 to 19) of bearing parts, characterized in that the bearing axles (12, 13) are arranged in the form of a T or of a cross relative to one another, so that the longitudinal central axis (15) of one bearing axle (13) essentially intersects the longitudinal central axis (14) of the other bearing axle (12) in its middle region.

2. Tool according to Claim 1, characterized in that the bearing axles (12, 13) rest in bearing bushes (16 to 19) of elastic material, in particular rubber or plastic, preferably two bearing bushes (16 to 19) which are a distance apart and are flush with one another being coordinated with the bearing axles (12, 13).

3. Tool according to Claim 2, characterized in that the bearing bushes (16 to 19) rest in bearing tubes (23, 26) of preferably circular or quadrilateral cross-section.

4. Tool according to any of Claims 1 to 3, characterized in that one bearing axle (12) is arranged essentially vertically and the other bearing axle (13) is arranged essentially horizontally.

5. Tool according to Claim 4, characterized in that the vertically arranged bearing axle (12) is arranged on the steering handle (9) and the horizontal bearing axle (13) is arranged on the tool (1).

6. Tool according to one or more of the preceding Claims 1 to 5, characterized in that the horizontal bearing axle (13) is fastened at approximately middle height to the vertical bearing tube (23), preferably by means of a flange-like head part (25).

7. Tool according to one or more of the preceding Claims 1 to 6, characterized in that the bearing axles (12, 13) and the bearing bushes (16 to 19) have a circular or quadrilateral, in particular square, outer and inner cross-sectional shape, respectively.

8. Tool according to any of the preceding Claims 1 to 7, characterized in that the vertical bearing axle (12) forms a rotary or pivot bearing in which the steering handle (9) can be swivelled horizontally to and fro and/or can be swivelled through 180° and can be fixed in the rotational end positions.

9. Tool according to one or more of the preceding Claims, characterized in that a horizontal pivot joint for lateral pivotal movmements of the steering handle (9), optionally up to 180°, having preferably a locking device for the steering handle (9) in its rotational end positions, is arranged between the steering handle (9) and the vertical bearing axle (12).

10. Tool according to claim 8 or 9, characterized in that a locking device having two joint discs (21, 22) arranged one on top of the other is provided, into which discs a pin (33) can be inserted from above in holes (34, 35) several holes (35) preferably being provided in the lower joint disc (22).

11. Tool according to one or more of the preceding Claims, characterized in that the bearing part (29) having the horizontal bearing axle (13) is arranged on the chassis or on a motor housing (8).

12. Tool according to Claim 11, characterized in that the bearing part (29) having the horizontal bearing axle (13) is arranged on the chassis or motor housing (8) in a position in which it is approximately flush with the edge of the chassis or motor housing (8), and the other bearing part (24) is arranged next to the chassis or motor housing (8).

13. Tool according to one or more of the preceding Claims, characterized in that the bearing part (24) having the vertical bearing axle (12) is arranged flush with the vertical central axis (31) of the chassis or motor housing (8).

14. Tool according to one or more of the preceding Claims, characterized in that the vertical bearing axle (12) is arranged in a central position in relation to the horizontal bearing axle (13).

15. Tool according to Claim 14, characterized in that the bearing part (29) having the horizontal bearing axle (13) is formed by two bearing part sections (26a, 26b) which are a distance apart, and the bearing part (24) having the vertical bearing axle (12) is arranged between the bearing part sections (26a, 26b).

16. Tool according to Claim 15, characterized in that the horizontal bearing axle (13) is likewise divided into two bearing axle sections (13a, 13b) which are a distance apart, and the bearing axle sections (13a, 13b) are fastened opposite one another on the bearing tube (23) of the bearing part (24) having the vertical bearing axle (12).

17. Tool according to one or more of the preceding Claims, characterized in that the bearing part (29) having the horizontal bearing axle (13) is fastened to a plate (27) fastened to the chassis or motor housing (8).

18. Tool according to Claim 17, characterized in that the plate (27) has a hole (37) into which projects the bearing part (24) having the vertical bearing axle (12).

## Revendications

1. Machine de travail à moteur conduite à la main (1), en particulier faucheuse, comportant un ou deux essieux (2) avec roues (3) et un manche de direction (9) présentant en particulier deux parties (9a, 9b) et monté sur la machine de travail (1) au moyen de deux axes d'appui perpendiculaires (12, 13) qui sont engagés dans des éléments d'appui élastiques (16 à 19) de parties d'appui, caractérisée par le fait que les axes d'appui (12, 13) sont disposés en T ou en croix, de sorte que l'axe longitudinal (15) d'un axe d'appui (13) coupe sensiblement l'axe longitudinal (14) de l'autre axe d'appui (12) dans la partie médiane de celui-ci.

2. Machine de travail selon la revendication 1, caractérisée par le fait que les axes d'appui (12, 13) sont montés dans des coussinets (16 à 19) en matière élastique, en particulier en caoutchouc ou en matière plastique, à chacun des axes d'appui (12, 13) étant affectés de préférence deux coussinets espacés et alignés (16 à 19).

3. Machine de travail selon la revendication 2, caractérisée par le fait que les coussinets (16 à 19) sont montés dans des tubes d'appui (23, 26) de section de préférence circulaire ou quadrangulaire.

4. Machine de travail selon l'une des revendications 1 à 3, caractérisée par le fait qu'un axe d'appui (12) est placé sensiblement verticalement et l'autre axe d'appui (13) placé sensiblement horizontalement.

5. Machine de travail selon la revendication 4, caractérisée par le fait que l'axe d'appui placé verticalement (12) est disposé sur le manche de direction (9) et l'axe d'appui horizontal (13) disposé sur la machine de travail (1).

6. Machine de travail selon une ou plusieurs des revendications précédentes 1 à 5, caractérisée par le fait que l'axe d'appui horizontal (13) est fixé à peu près à mi-hauteur au tube d'appui vertical (23) de préférence par une tête en forme de flasque (25).

7. Machine de travail selon une ou plusieurs des revendications précédentes 1 à 6, caractérisée par le fait que les axes d'appui (12, 13) et les coussinets (16 à 19) ont respectivement une section extérieure et une section intérieure circulaires ou quadrangulaires, en particulier carrées.

8. Machine de travail selon l'une des revendications précédentes 1 à 7, caractérisée par le fait que l'axe d'appui vertical (12) forme un appui de rotation ou de pivotement sur lequel le manche de direction (9) peut pivoter horizontalement d'un certain angle dans un sens et dans l'autre et/ou de 180° et être bloqué dans ses positions angulaires extrêmes.

9. Machine de travail selon une ou plusieurs des revendications précédentes, caractérisée par le fait qu'entre le manche de direction (9) et l'axe d'appui vertical (12) est placée une articulation horizontale de pivotement pour de grands mouvements latéraux de pivotement, éventuellement de jusqu'à 180°, du manche de direction (9) avec de préférence un dispositif de blocage de celui-ci dans ses positions angulaires extrêmes.

10. Machine de travail selon l'une des revendications 8 et 9, caractérisée par le fait qu'il est prévu un dispositif de blocage comportant deux disques d'articulation placés l'un au-dessus de l'autre (21, 22) dans lesquels une goupille (33) peut être engagée d'en haut dans des trous (34, 35), de préférence plusieurs trous (35) étant prévus dans le disque d'articulation inférieur (22).

11. Machine de travail selon une ou plusieurs des revendications précédentes, caractérisée par le fait que la partie d'appui (29) comportant l'axe d'appui horizontal (13) est placée sur le châssis ou sur un carter de moteur (8).

12. Machine de travail selon la revendication 11, caractérisée par le fait que la partie d'appui (29) comportant l'axe d'appui horizontal (13) est placée sur le châssis ou le carter de moteur (8) dans une position dans laquelle elle est à peu près contiguë au bord du châssis ou du carter de moteur (8), et l'autre partie d'appui (24) est placée à côté du châssis ou du carter de moteur (8).

13. Machine de travail selon une ou plusieurs des revendications précédentes, caractérisée par le fait que la partie d'appui (24) comportant l'axe d'appui vertical (12) est alignée avec l'axe vertical (31) du châssis ou du carter de moteur (8).

14. Machine de travail selon une ou plusieurs des revendications précédentes, caractérisée par le fait que l'axe d'appui vertical (12) est placé en position médiane par rapport à l'axe d'appui horizontal (13).

15. Machine de travail selon la revendication 14, caractérisée par le fait que la partie d'appui (29) présentant l'axe d'appui horizontal (13) est formée de deux sections de partie espacées (26a, 26b) et la partie d'appui (24) présentant l'axe d'appui vertical (12) est placée entre ces deux sections (26a, 26b).

16. Machine de travail selon la revendication 15, caractérisée par le fait que l'axe d'appui horizontal (13) est également divisé en deux sections de partie espacées (13a, 13b) et ces sections (13a, 13b) sont fixées à l'opposé l'une de l'autre au tube d'appui (23) de la partie d'appui (24) présentant l'axe d'appui vertical (12).

17. Machine de travail selon une ou plusieurs des revendications précédentes, caractérisée par le fait que la partie d'appui (29) présentant l'axe d'appui horizontal (13) est fixée sur une plaque (27) fixée sur le châssis ou sur le carter de moteur (8).

18. Machine de travail selon la revendication 17, caractérisée par le fait que la plaque (27) présente un trou (37) dans lequel s'enfonce la partie d'appui (24) présentant l'axe d'appui vertical (12).
